# EUROPÄISCHE PATENTSCHRIFT

(11) **EP 3 341 220 B1**
(45) Veröffentlichungstag und Bekanntmachung des Hinweises auf die Patenterteilung: **27.03.2024**
(21) Anmeldenummer: 16747441.0
(22) Anmeldetag: 21.07.2016
(51) Int. Cl.: B60B 7/04, B60B 7/00, B60B 3/10, B60B 7/18

(54) **FAHRZEUGRAD FÜR EIN FAHRZEUG**
VEHICLE WHEEL FOR A VEHICLE
ROUE DE VÉHICULE POUR VÉHICULE

(30) Priorität: 26.08.2015 DE 102015010962; 26.08.2015 DE 102015010963; 24.11.2015 DE 102015015721
(43) Veröffentlichungstag der Anmeldung: 04.07.2018
(73) Patentinhaber: Mercedes-Benz Group AG, 70372 Stuttgart (DE)
(72) Erfinder: BACH, Ronny, 74366 Kirchneim am Neckar (DE); BAUDY, Bastian, 70178 Stuttgart (DE); BINDER, Christian, 71292 Friolzheim (DE); JEHLE-GRAF, Erich, 76228 Karlsruhe (DE); KONERMANN, Martin, 70619 Stuttgart (DE); MEYER, Volker, 72649 Wolfschlugen (DE); REICHERT, Steffen, 70372 Stuttgart (DE); RUCKHABERLE, Andrej, 71032 Böblingen (DE); SCHLEY, Antonis, 70619 Stuttgart (DE); WEHNERT, Sylvain, 71116 Gärtringen (DE)
(74) Vertreter: Novagraaf Group
(86) Internationale Anmeldenummer: PCT/EP2016/001271
(87) Internationale Veröffentlichungsnummer: WO 2017/032435

(56) Entgegenhaltungen:
- DE-A1- 3 816 415
- FR-A1- 2 699 453
- US-A1- 2008 036 285

## Beschreibung

Der Gegenstand der Erfindung betrifft ein Fahrzeugrad für ein Fahrzeug, gemäß Oberbegriff des Anspruchs 1.

Aus der DE 101 61 869 A1 geht ein Fahrzeugrad mit einer Mehrzahl von Speichen, Lamellen, Flügeln oder dergleichen hervor, welche an einer Außenseite des Fahrzeugrades angeordnet sind und ein Felgenbett mit einem Schieberelement verbinden. Zwischen den Speichen, Lamellen, Flügeln oder dergleichen sind dabei Durchbrüche oder Zwischenräume vorgesehen, die infolge einer Bewegung des Fahrzeugrades abdeckbar beziehungsweise verschließbar sind. Hierzu ist eine fliehkraftgesteuerte Kinematik vorgesehen, mittels welcher entsprechende Abdeck- beziehungsweise Massenelemente bewegbar sind.

Des Weiteren ist es bekannt, dass ein Fahrzeugrad mit stark dreidimensionaler Formensprache und starker "Schüsselung" einem Fahrzeug einen kraftvollen sportlichen Eindruck verleiht. Unter dem Begriff "Schüsselung" wird im Zusammenhang mit einem Fahrzeugrad beziehungsweise einer Felge verstanden, dass auf der Außenseite zumindest im zentralen, nabennahen Bereich eine Vertiefung, Mulde, Einbuchtung oder dergleichen vorgesehen ist, wobei diese Form beispielsweise durch mehrere Speichen-, Lamellen-, Flügelelemente oder dergleichen gebildet sein kann.

Bei schneller Fahrt allerdings leistet der Luftwiderstand einen großen Beitrag zum Treibstoffverbrauch. Ein stark geschüsseltes Fahrzeugrad weist hier erhebliche Nachteile hinsichtlich des Luftwiderstandes auf.

Aus der EP 1 319 526 A2 geht ein Fahrzeugrad hervor, welches eine Felge und eine im zentralen Bereich vorgesehene Nabe umfasst, wobei Felge und Nabe mittels über den Umfang verteilt angeordneten Speichen miteinander verbunden sind. Zwischen den Speichen sind Durchbrüche vorgesehen, welche mittels eines an einer Außenseite des Fahrzeugrades angeordneten, ähnlich einer scheibenförmigen Radkappe ausgebildeten Schieberelements zumindest teilweise abdeckbar sind. Hierzu ist das Schieberelement aus einer innenliegenden Stellung, in welcher die Durchbrüche abgedeckt sind, in Richtung der Raddrehachse nach außen in eine außenliegende Stellung verschiebbar, in welcher ein Spalt zwischen dem scheibenförmigen Schieberelement und dem Fahrzeugrad geschaffen ist, über den ein Kühlluftstrom von einer Fahrzeugbremse nach außen gelangt. Mittels dieses Schieberelements wird das äußere Erscheinungsbild des Fahrzeugrades in Abhängigkeit der Fahrzeuggeschwindigkeit praktisch nicht verändert, insbesondere nicht die Schüsselung des Fahrzeugrades.

Aus der gattungsbildenden US 2008/036285 A1 geht eine Felge für ein Kraftfahrzeug hervor, die eine Mehrzahl von feststehenden Speichen aufweist, welche im zentralen Bereich der Felge eine unveränderbare Vertiefung bilden. An der Felge ist eine Radabdeckung angebracht, an welcher wiederum eine Anzahl von schwenkbar gelagerten Oszillatoren vorgesehen sind, welche mittels eines Fliehkraft betätigbaren Schieberelements, welches entlang der Drehachse der Felge zwischen einer ersten Position und einer zweiten Position hin und her verschiebbar ist, schwenkbar sind. In der zweiten Position des Schieberelements werden die Oszillatoren durch Öffnungen in der Felge zu deren Außenseite hin ausgestellt, ragen aus dieser also heraus, während sie in der ersten Position des Schieberelements in eine hinter die Felgenaußenseite liegende Position verlagert sind. Auch bei dieser Felge ist die Schüsselung der Felge unveränderbar.

Aufgabe der Erfindung ist es daher, ein Fahrzeugrad der eingangs genannten Art zu schaffen, welches eine starke Schüsselung bei langsamer Fahrt sowie verbesserte aerodynamische Eigenschaften bei schnellerer Fahrt aufweist.

Diese Aufgabe wird erfindungsgemäß durch ein Fahrzeugrad mit den Merkmalen des Anspruchs 1 gelöst. Vorteilhafte Ausgestaltungen der Erfindung sind Gegenstand der abhängigen Ansprüche.

Das Fahrzeugrad umfasst eine Mehrzahl von Speichen, Lamellen, Flügeln, Radsegmente oder dergleichen, welche an einer Außenseite des Fahrzeugrades angeordnet sind und die zumindest im zentralen, nabennahen Bereich eine Vertiefung, Mulde, Einbuchtung oder dergleichen bilden. Des Weiteren ist eine Kinematik, mittels welcher die Kontur der Außenseite des Fahrzeugrades veränderbar ist, und ein zwischen einer innenliegenden Stellung und einer außenliegenden Stellung in Richtung der Drehachse des Fahrzeugrades verschiebbares Schieberelement (26) vorgesehen. Um ein Fahrzeugrad der eingangs genannten Art zu schaffen, welches eine starke Schüsselung bei langsamer Fahrt sowie verbesserte aerodynamische Eigenschaften bei schnellerer Fahrt aufweist, ist es erfindungsgemäß vorgesehen, dass zumindest ein Teil der Speichen, Lamellen, Flügel, Radsegmente oder dergleichen an dem Schieberelement angelenkt und gemeinsam mit dem Schieberelement unter Veränderung der Vertiefung, Mulde, Einbuchtung oder dergleichen in Richtung der Drehachse des Fahrzeugrades verschiebbaren Schieberelement verstellbar sind, und dass die Radsegmente jeweils den Freiraum zwischen zwei benachbart angeordneten Speichen überdecken, wobei die Radsegmente stirnseitig mit den Speichen eine entsprechend große Vertiefung mit einer insgesamt geschlossenen Außenfläche am Fahrzeugrad ausbilden. In der innenliegenden Stellung ist der Abstand des Schieberelements zu einer Längsmittelachse des Fahrzeugs kleiner als in der außenliegenden Stellung. Die Verlagerung des Schieberelements erfolgt geschwindigkeitsabhängig also in Fahrzeugquerrichtung und somit auch in radialer Richtung zur Fahrzeug-Längsmittelachse. Die Anlenkung der Speichen, Lamellen, Flügel, Radsegmente oder dergleichen an dem Schieberelement bewirkt, dass bei der Verlagerung des Schieberelements nach außen die Speichen, Lamellen oder dergleichen auf- beziehungsweise ausgestellt werden, was zu einer Reduzierung der Schüsselung des Fahrzeugrads führt. Hierdurch ergibt sich eine besonders einfache und wirksame Möglichkeit, den Strömungswiderstandes des Fahrzeugrades an dessen Außenseite zu verbessern.

Bei einem besonders vorteilhaften Ausführungsbeispiel des Fahrzeugrades ist vorgesehen, dass zumindest ein Teil der Speichen, Lamellen, Flügel, Radsegmente oder dergleichen an einer am Fahrzeugrad ortsfest angeordneten Achse (a) schwenkbar gelagert sind. Die Speichen, Lamellen, Flügel, Radsegmente oder dergleichen werden also beim Verstellen des zentralen Schieberelements nach außen gestellt und schwenken dabei um die Achse (a) ihrer jeweiligen äußeren Lagerstelle, sodass sie bei in außenliegender Stellung angeordnetem Schieberelement eine insgesamt im Wesentlichen senkrechte Lage einnehmen, in der das Fahrzeugrad auf seiner Außenseite keine beziehungsweise nur eine geringe Schüsselung aufweist. In dieser Lage sind die Speichen, Lamellen, Flügel, Radsegmente oder dergleichen also zumindest im Wesentlichen in Fahrzeughochrichtung (z-Richtung) ausgerichtet und damit senkrecht zur Fahrbahn.

Erfindungsgemäß ist demnach vorgesehen, dass das Fahrzeugrad mit einem beweglichen, insbesondere translatorisch verlagerbaren, Schieberelement versehen ist. Vorzugsweise ist dieses Schieberelement in Richtung beziehungsweise parallel zur Drehachse des Fahrzeugrads verschiebbar gelagert. Vorzugsweise fluchten die Drehachse des Fahrzeugrads und die Längsmittelachse des Schieberelements miteinander beziehungsweise fallen zusammen. Das Schieberelement ist in diesem Fall also konzentrisch zur Fahrzeugrad-Drehachse angeordnet beziehungsweise koaxial zu dieser verschiebbar.

Erfindungsgemäß ist vorgesehen, dass am Fahrzeugrad hierzu eine entsprechende Kinematik vorgesehen, sodass das Schieberelement des Fahrzeugrades von einer ersten Position, in welcher die Felge eine entsprechend große Schüsselung aufweist, in eine zweite Position nach außen verschiebbar ist, um die Schüsselung der Felge zumindest zu reduzieren oder alternativ ganz aufzuheben. Hierdurch ist ein im Fahrbetrieb sich aerodynamisch anpassendes und damit aktiv optimierbares Fahrzeugrad geschaffen.

In weiterer Ausgestaltung der Erfindung umfasst die Kinematik mindestens einen Fliehkraftsteller, mittels welchem das zentrale Schieberelement zwischen der innenliegenden Stellung und der außenliegenden Stellung verstellbar ist. Die Aktivierung der Verlagerungsbewegung des Schieberelements und die hierfür notwendigen Kräfte resultieren dabei aus den Fliehkräften des mindestens einen Fliehkraftstellers. In diesem Zusammenhang hat es sich als vorteilhaft gezeigt, wenn bei einer entsprechend großen Umfangsgeschwindigkeit des Fahrzeugrades eine selbsttätige Verstellung des Schieberelements aus der innenliegenden Stellung in Richtung der außenliegenden Stellung erfolgt. Durch die Nutzung der Fliehkraft zur Aktivierung und Verstellung des an dem Fahrzeugrad vorgesehenen Schieberelements ist das System somit unabhängig von Elektrik und Elektronik. Auf aktive Steller, Steuergeräte, Funkeinrichtungen und dergleichen kann daher bei einer Fliehkraftregelung verzichtet werden. Eine Verwendung unabhängig von Fahrzeuggröße, -baureihe und -typ ist möglich. Die Anpassung der Aktivierungsgeschwindigkeit erfolgt vorzugsweise über die Hebellängen beziehungsweise die Größe der Massegewichte. Es sei jedoch angemerkt, dass alternativ oder zusätzlich zur Nutzung der Fliehkraft auch ein aktiver Steller oder dergleichen umfassendes System eingesetzt werden könnte.

In weiterer vorteilhafter Ausgestaltung der Erfindung umfasst die Kinematik mindestens ein Rückstellelement, insbesondere mindestens eine Rückstellfeder, mittels welchem beziehungsweise welcher das Schieberelement zwischen der außenliegenden Stellung und der innenliegenden Stellung selbsttätig rückverstellbar ist. Auch hierdurch ergibt sich ein System unabhängig von Elektrik und Elektronik. Eine selbsttätige Rückstellung des Schieberelements aus der außenliegenden Stellung in Richtung der innenliegenden Stellung erfolgt somit vorzugsweise bei Unterschreiten einer bestimmten Umfangsgeschwindigkeit des Fahrzeugrades.

Eine weiter bevorzugte Ausführungsform der Erfindung zeichnet sich dadurch aus, dass die Speichen, Lamellen, Flügel, Radsegmente oder dergleichen von dem Schieberelement her um eine Drehachse in der Nähe eines Felgenhorns klappbar sind. Somit ist es beispielsweise möglich, dass die Speichen, Lamellen, Flügeln, Radsegmente oder dergleichen bündig zur Radsichel nach außen geklappt werden, wodurch die Schüsselung reduziert wird und ein nahezu flächiges Fahrzeugrad mit aerodynamisch optimierter Kontur entsteht.

Sind in weiterer Ausgestaltung der Erfindung die Speichen, Lamellen, Flügel, Radsegmente oder dergleichen von einem Trägerrad aufgenommen, so ist hierdurch eine separate Baueinheit geschaffen, welche beispielsweise an Speichen des Fahrzeugrades und/oder dessen Felge angesetzt werden können. Bei der Reduzierung der Schüsselung kann somit ein nahezu flächiges Fahrzeugrad mit aerodynamisch optimierter Kontur erzielt werden. Das erfindungsgemäße System kann demzufolge sowohl Teil des Fahrzeugrads selbst sein als auch eine separate Einrichtung, welche nachträglich - nach Art einer Radkappe - an dem Fahrzeugrad angebracht werden kann.

Schließlich hat es sich als vorteilhaft gezeigt, wenn die Radsegmente als Flächenelemente zwischen den Speichen, Lamellen, Flügeln oder dergleichen ausgebildet sind. Diese Flächenelemente, welche beispielsweise jeweils den Freiraum zwischen zwei benachbart angeordneten Radsegmenten überdecken, ermöglichen gemeinsam mit den Speichen, Lamellen, Flügeln oder dergleichen eine flache, scheibenradähnliche Gestaltung des Fahrzeugrades an der Außenseite.

Weitere Einzelheiten der Erfindung ergeben sich aus der nachfolgenden Beschreibung bevorzugter Ausführungsbeispiele sowie anhand der Zeichnungen. Dabei zeigen:

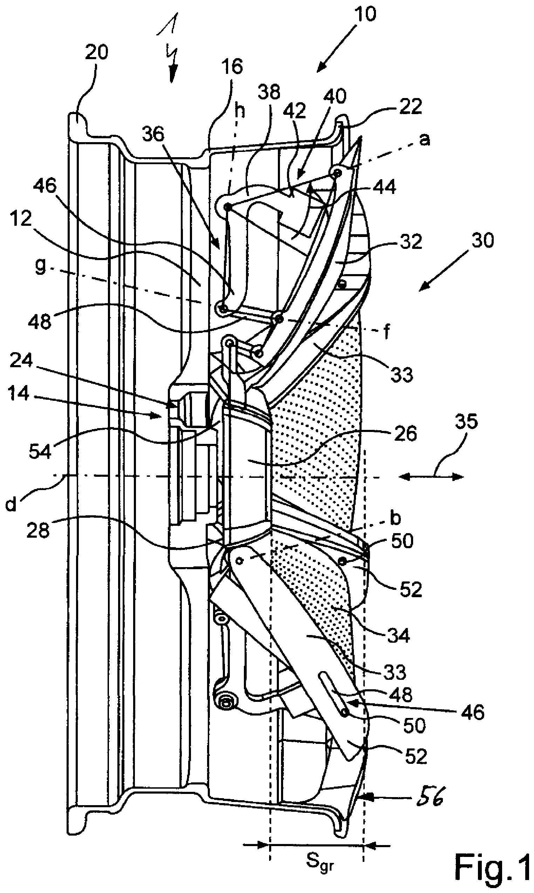

- Fig. 1: eine Schnittdarstellung eines Ausführungsbeispiels des erfindungsgemäßen Fahrzeugrades mit einem axial verschiebbaren, hier in einer innenliegenden Stellung angeordneten Schieberelement, das mittels einer geeigneten, Massengewichte aufweisenden Kinematik in Richtung der Drehachse des Fahrzeugrads verschiebbar ist, um die Schüsselung des Fahrzeugrades zu verändern;

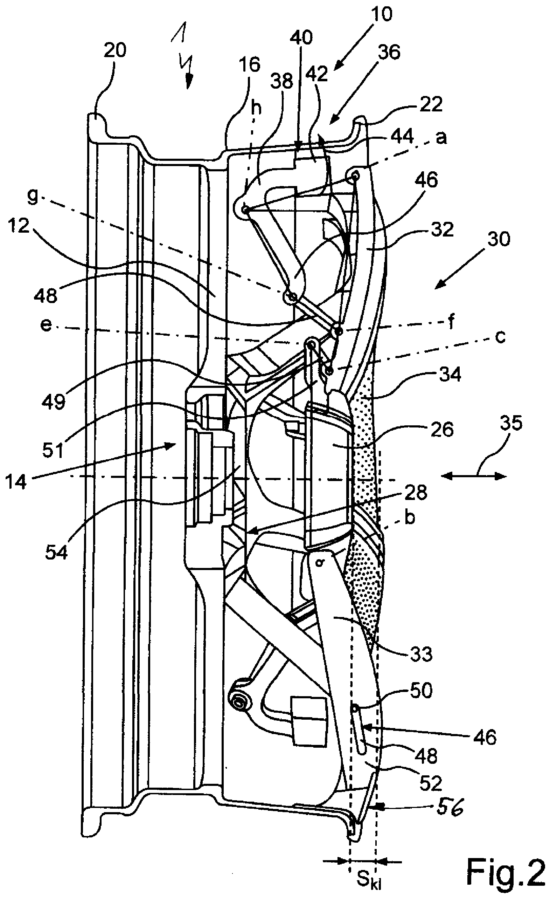

- Fig. 2: eine Schnittdarstellung des Ausführungsbeispiels des Fahrzeugrades gemäß Fig. 1, bei der das Schieberelement mittels der Kinematik axial in die außenliegende Stellung verschoben ist, wodurch die Schüsselung des Fahrzeugrades reduziert ist;

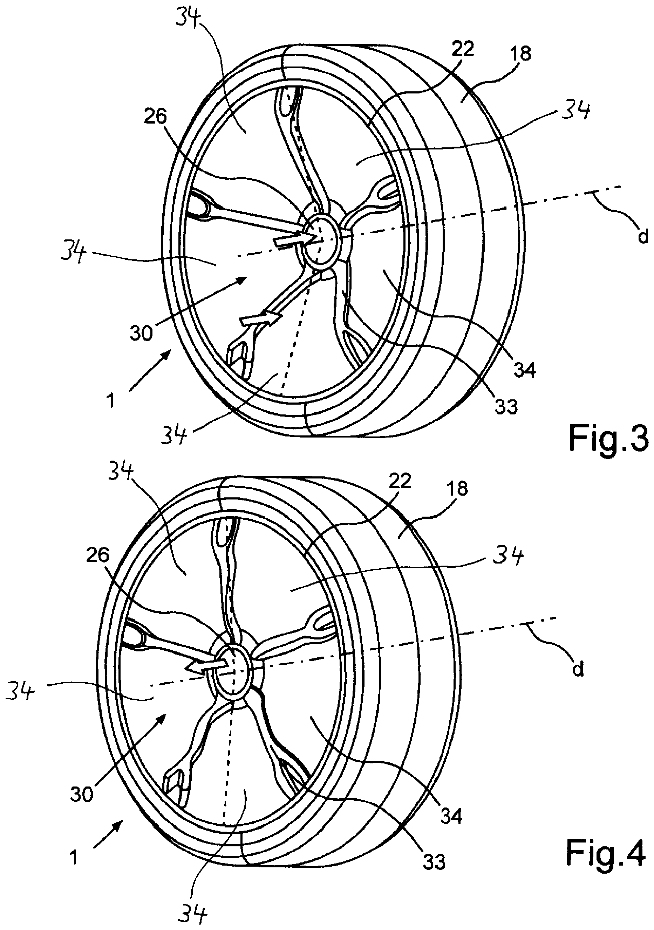

- Fig. 3: eine perspektivische Darstellung eines weiteren Ausführungsbeispiels des erfindungsgemäßen Fahrzeugrades für ein Fahrzeug mit einem axial verschiebbaren, hier wiederum in einer innenliegenden Stellung angeordneten Schieberelement, das mittels einer Kinematik in Richtung der Drehachse des Fahrzeugrads nach außen verschiebbar ist und
- Fig. 4: eine perspektivische Darstellung des Ausführungsbeispiels des Fahrzeugrades gemäß Fig. 3, bei der das Schieberelement mittels der Kinematik axial in die außenliegende Stellung verschoben ist, wodurch das Fahrzeugrad eine nur noch geringe Schüsselung aufweist.

In den Fig. 1 und 2 ist ein Fahrzeugrad 1 für einen Personenkraftwagen jeweils in einer Schnittdarstellung entlang seiner Mittellängsachse beziehungsweise Drehachse (d) gemäß einem ersten Ausführungsbeispiel und in den Fig. 3 und 4 jeweils in einer perspektivischen Darstellung gemäß einem weiteren Ausführungsbeispiel dargestellt. Beide Ausführungsbeispiele werden aufgrund ihrer im Wesentlichen gleichen Ausgestaltung im Weiteren jedoch gemeinsam beschrieben. Gleiche Teile sind mit gleichen Bezugszeichen versehen, sodass insofern auf die vorangegangene Beschreibung verwiesen werden kann.

Das Fahrzeugrad 1 umfasst eine Felge 10 und eine im zentralen Bereich vorgesehene Nabe 14, welche mittels eines hier scheibenartig ausgebildeten Trägerelements 12 miteinander verbunden sind. Das Trägerelement 12 weist mehrere Öffnungen auf, wodurch quasi Speichen gebildet sind, welche die Felge 10 und die Nabe 14 miteinander verbinden. Felge 10, Nabe 14 sowie Trägerelement 12 sind hier einstückig miteinander verbunden beziehungsweise ausgebildet. Die Drehachse des Fahrzeugrads 1 im am Fahrzeug montierten Zustand ist mit dem Bezugszeichen "d" gekennzeichnet.

Das Fahrzeugrad 1 kann aus Leichtmetall, insbesondere einer Aluminiumlegierung hergestellt sein, beispielsweise mittels eines Massivumformverfahrens, beispielsweise Schmieden, oder aber aus Stahl oder dergleichen. Das erfindungsgemäße Fahrzeugrad 1 kann gemäß einer in den Figuren nicht dargestellten Ausführungsvariante anstelle des einen Trägerelements 12 auch mehrere Trägerelemente 12 aufweisen, die beispielsweise als Speichen, Lamellen, Flügel, Radsegmente oder dergleichen ausgebildet sein können, welche vorzugsweise über den Radumfang verteilt in einem Abstand voneinander angeordnet sind.

Die Felge 10 umfasst ein im Querschnitt im Wesentlichen U-förmiges Felgenbett 16 zur Aufnahme eines lediglich in den Fig. 3 und 4 gezeigten Reifens 18. Das Felgenbett 16 wird durch ein inneres Felgenhorn 20 und äußeres Felgenhorn 22 begrenzt, wobei "innen" und "außen" sich auf die Anordnung des Felgenhorns bei am Fahrzeug montiertem Fahrzeugrad 1 in Bezug beispielsweise auf die Fahrzeuglängsachse bezieht, das heißt der Abstand des "inneren Felgenhorns 20" zur Längsmittelachse des Fahrzeugs ist kleiner als der des "äußeren Felgenhorns 22".

Im Bereich der Nabe 14 beziehungsweise in deren Übergangsbereich zum Trägerelement 12 ist eines einer Mehrzahl von gleichmäßig entlang eines Lochkreises verteilter Schraublöcher 24 erkennbar, über welches das Fahrzeugrad 1 mittels jeweiliger Schrauben an einem Radträger einer Fahrzeugachse befestigt werden kann. Mit Radträger wird üblicherweise der Teil der Radaufhängung bezeichnet, der die Radnabe 14 und damit das Fahrzeugrad 1 aufnimmt.

In den Fig. 1 und 3 ist das Fahrzeugrad 1 in einer Ausgangsstellung beziehungsweise einem geschüsselten, insbesondere stark geschüsseltem Zustand dargestellt, in der ein axial verschiebbares Schieberelement 26 in seiner innenliegenden Stellung, in der dieses seinen kleinsten Abstand zur Fahrzeuglängsmittelachse (Y=0) aufweist, angeordnet ist. In dieser Lage liegt das Schieberelement 26 an einer außenseitigen Anschlagfläche 28 im Bereich der Nabe 14 beziehungsweise im Übergangsbereich zwischen der Nabe 14 und dem Trägerelement 12 des Fahrzeugrads 1 an. In dieser Position des Schieberelements 26 weist das Fahrzeugrad 1 auf seiner Außenseite 30 eine entsprechend große Schüsselung S_{gr} auf. Im vorliegenden Fall bedeutet dies, dass am in Richtung der Drehachse (d) des Fahrzeugrads 1 verstellbar, insbesondere verschiebbar gelagerte Schieberelement 26 beispielsweise auf im Weiteren noch näher beschriebene Weise schwenkbar angebrachte Speichen 33 in Axialrichtung der Drehachse (d) schräg nach innen verlaufen, so dass sich insgesamt stirnseitig an der Außenseite 30 eine entsprechend große Vertiefung am Fahrzeugrad 1 ergibt.

Das Schieberelement 26 ist hier zumindest im Wesentlichen rotationssymmetrisch ausgebildet, wobei seine Längsmittelachse koaxial zur Drehachse (d) des Fahrzeugrads 1 angeordnet ist. Das heißt, das Schieberelement 26 ist im zentralen Bereich des Fahrzeugrads angeordnet und rotiert um die gleiche Achse wie das Fahrzeugrad 1. In bevorzugter Ausführungsform des Fahrzeugrads 1 ist vorgesehen, dass das Schieberelement 26 in Richtung seiner Verlagerungsrichtung, hier also entlang der Drehachse (d) des Fahrzeugrads 1, geführt ist, was beispielsweise mittels eines am Fahrzeugrad 1 vorgesehenen, in den Figuren nicht dargestellten Führungselements, welches mit dem Schieberelement 26 zusammenwirkt, realisierbar ist. Dieses Führungselement kann beispielsweise als längliches Element ausgebildet sein, welches in eine entsprechende Führungsaufnahme im Schieberelement 26 eingreift. Hierzu kann das Schieberelement 26 auch in Form einer Hülse ausgebildet sein.

Wie bereits erläutert, ist unter der Schüsselung S im Zusammenhang mit dem Fahrzeugrad 1 zu verstehen, dass auf der Außenseite 30 zumindest im zentralen, nabennahen Bereich eine Vertiefung, Mulde, Einbuchtung oder dergleichen vorgesehen ist, wobei diese Form beispielsweise durch mehrere Speichen 33, Lamellen, Flügel- und/oder Flächenelemente oder dergleichen gebildet sein kann. Beim vorliegenden, in den Figuren 1 bis 4 dargestellten Ausführungsbeispiel sind im Folgenden als Radsegmente 34 bezeichnete Flächenelemente vorgesehen, welche jeweils den Freiraum zwischen zwei benachbart angeordneten Speichen 33 überdecken. Diese bilden demnach stirnseitig mit den Speichen 33 eine entsprechend große Vertiefung am Fahrzeugrad 1, also die Schüsselung S, aus. Die Anordnung und Ausgestaltung der Radsegmente 34 ist hier so gewählt, dass sich eine insgesamt geschlossene Außenfläche das Fahrzeugrads 1 im Bereich der sogenannten Felgenschüssel ergibt. Die Radsegmente 34 weisen bei dem in den Figuren dargestellten Ausführungsbeispiel des Fahrzeugrads 1 jeweils - zumindest im Wesentlichen - die Form eines Kreisausschnitts auf.

Die große Schüsselung S_{gr} verleiht dem Fahrzeug einen kraftvollen sportlichen Eindruck, weist aber bei schneller Fahrt erhebliche Nachteile hinsichtlich des Luftwiderstandes auf. Bei langsamer Fahrt hingegen wird kein so großer Anspruch an die Aerodynamik gestellt beziehungsweise wirkt sich die Umströmung des Fahrzeugrades 1 und der Radhäuser in nicht so einem großen Maße auf den momentanen Luftwiderstand des Fahrzeugs aus. Die große Schüsselung S_{gr} ist daher bei langsamer Fahrt bevorzugt, da diese große Möglichkeiten bei der Gestaltung des Fahrzeugrad- beziehungsweise Felgendesigns eröffnet.

Bei einer entsprechend großen Geschwindigkeit des Fahrzeugs und einer damit einhergehenden Umfangsgeschwindigkeit des Fahrzeugrades 1 hingegen werden die Speichen 33 und mit diesen jeweilige, kreissegmentförmigen Radsegmente 34 fliehkraftgesteuert - bewirkt gemeinsam mit dem verschiebbar am Fahrzeugrad 1 angeordneten Schieberelement 26 - aus der in den Fig. 1 und 3 gezeigten innenliegenden Stellung auf im Weiteren noch näher beschriebene Weise nach außen bewegt und zwar maximal bis in seine in den Fig. 2 und 4 dargestellte außenliegende Stellung, in welcher die Schüsselung Sₖₗ des Fahrzeugrades 1 deutlich kleiner ist und vorzugsweise ein Minimum aufweist. Diese Verlagerbarkeit des Schieberelements 26 ist in den Fig. 1 und 2 mit einem Doppelpfeil 35 angedeutet.

Die Anordnung und Ausgestaltung der Speichen 33 und der Radsegmente 34 ist in der außenliegenden Stellung so gewählt, dass sich eine insgesamt geschlossene Außenseite 30 des Fahrzeugrades 1 ergibt. Zwischen den Radsegmenten 34 verlaufen dabei die weiteren Speichen 33, welche am beweglichen Schieberelement 26 über eine zugehörige Achse (b) angelenkt sind. Die zwischen den Speichen 33, Lamellen oder dergleichen vorgesehenen Flächenelemente 34, werden demnach in eine flache, scheibenradähnliche Position gebracht, in welcher das Fahrzeugrad 1 eine zumindest verringerte Schüsselung (S) aufweist. Die zumindest nahezu ebene Gestaltung der Außenseite 30 beziehungsweise Felgen-/Fahrzeugradfläche wirkt sich dabei optimierend auf die Aerodynamik aus.

Um die fliehkraftgesteuerte und -bewirkte Verlagerung des Schieberelements 26 gemeinsam mit den Speichen 33 und den vor beziehungsweise zwischen diesen angeordneten Radsegmenten 34 zwischen der innenliegenden und der außenliegenden Stellung zu erreichen, ist vorliegend eine Kinematik 36 vorgesehen. Im Zusammenhang mit der hier vorliegenden Erfindung wird unter dem Begriff "Kinematik" ein Mechanismus verstanden, der so ausgebildet ist, dass die vorstehend beschriebene Verlagerung von Teilen des Fahrzeugrads 1 zur gezielten Veränderung beziehungsweise Einstellung der Schüsselung des Fahrzeugrads 1 bewirkt wird. Bei einem besonders vorteilhaften Ausführungsbeispiel des Fahrzeugrads 1 ist vorgesehen, dass die Kinematik 36 ein rein mechanischer Mechanismus ist. Gemäß einer anderen Ausführungsvariante des Fahrzeugrads 1 kann die Kinematik 36 neben mechanischen Teilen auch pneumatische, hydraulische oder elektrische Komponenten zur Realisierung der gewünschten Verstellung von Teilen des Fahrzeugrads zur Beeinflussung des Luftwiderstands aufweisen.

Die Aktivierung der Verlagerungsbewegung des Schieberelements 26 und die hierfür notwendigen Kräfte resultieren demzufolge aus den Fliehkräften mehrerer, im Weiteren noch näher erläuterter Massengewichte 42 am Fahrzeugrad 1, die durch die Kinematik 36 mit einer zentralen Führung (Kräfteausgleich und Zentrierung) an das Schieberelement 26 weitergeleitet werden. Dadurch hebt das Schieberelement 26 von der Anschlagfläche 28 ab und verschiebt sich koaxial zur Drehachse (d) des Fahrzeugrads nach außen.

Von außen nicht sichtbare Stellhebel 32 als Teil der Kinematik 36 sind dabei an einer jeweiligen Schwenkachse (a), die in der Nähe des äußeren Felgenhorns 22 angeordnet ist, verlagerbar. Dies erfolgt mittels eines jeweils zugeordneten, winkelförmigen Lenkerhebels 38, der um eine jeweilige Hebelachse (h), die nahe des Trägerelements 12 angeordnet ist, verschwenkbar ist. Am äußeren Ende 40 des Lenkerhebels 38 ist dabei das zugehörige Massengewicht 42 angeordnet, welches bei steigender Umdrehungs- beziehungsweise Umfangsgeschwindigkeit des Fahrzeugrades 1 in Richtung eines jeweiligen, in Fig. 1 und 2 gezeigten Pfeils 44 um die Hebelachse (h) -der Zentrifugalkraft folgend- nach außen verlagert wird.

Die Verlagerung des Massengewicht 42 bewirkt eine in Zusammenschau der Fig. 1 und 2 erkennbare Verschwenkung des Lenkerhebels 38, die wiederum eine Bewegung eines im Bereich eines Gelenks (g) an einem Ende 46 mit dem Lenkerhebel 38 verbundenen Schubhebels 48 in Richtung nach außen bewirkt. Da der Schubhebel 48 am gegenüberliegenden äußeren Ende über ein Gelenk (f) mit dem zugeordneten Stellhebel 32 verbunden ist, wird diese mit ihrem inneren Endbereich entsprechend in Richtung nach außen bewegt, um die Schüsselung (S) zu reduzieren beziehungsweise gegebenenfalls vollständig zu eliminieren. Einhergehend damit werden auch die flächigen Radsegmente 34 mit ihrem inneren Bereich nach außen verschwenkt, und zwar um die Achse (a) der jeweiligen, hinter dem Radsegment 34 angeordneten und mit diesem verbundenen Stellhebel 32. Ebenfalls wird das der Schieberelement 26 nach außen verschoben durch einen jeweiligen, am inneren Ende der jeweiligen Speiche in Bereich eines Gelenks (c) angelenkten Hebel 49, der über ein Gelenk (e) mit einem jeweiligen, radial abkragenden Hebelarm 51 des Schieberelements 26 angelenkt ist. Durch Verlagerung des jeweiligen Stellhebels 32 mit seinem inneren Ende nach außen wird demzufolge auch eine Verschiebung beziehungsweise Verlagerung des Schieberelements 26 erreicht. Durch das Verlagern des Schieberelements 26 beziehungsweise der Radsegmente 34 werden zwangsläufig auch die dazwischen angeordneten Speichen 33 verlagert. Oder anders gesagt werden die ebenfalls in die Kinematik 36 eingebundenen Speichen 33, Lamellen oder dergleichen durch eine Verschiebung des Schieberelements 26 mit deren dem Schieberelement zugewandten Enden zusammen mit dem Schieberelement 26 - in Querrichtung des Fahrzeugs gesehen - nach außen verlagert.

In Fig. 2 befinden sich demzufolge auch die beweglichen Speichen 33, welche vorzugsweise endseitig an dem axial verschiebbaren Schieberelement 26 angelenkt sind, in einer Position, in der das Fahrzeugrad 1 eine nur noch geringe Schüsselung (S) aufweist, das heißt die Vertiefung an der Außenseite des Fahrzeugrads 1 ist gegenüber der Ausgangsstellung gemäß Fig. 1 deutlich weniger ausgeprägt, was besonders vorteilhaft hinsichtlich des Strömungswiderstandes des Fahrzeugrades 1 ist. Ermöglicht wird dies durch eine jeweilige Schwenk-Schiebelagerung 46 der jeweiligen Speiche 33 an deren äußerem Ende, welche durch ein Langloch 48 auf Seiten der Speiche 33 und ein in dieses eingreifendes Bolzenelement 50 gebildet ist, welches sich zwischen zwei jeweiligen, seitlich der Speiche 33 anliegenden Speichenarme 52 erstreckt. Da diese Speichenarme 52 fest relativ zum Fahrzeugrad 1 sind, kann somit die Speiche 33 im Bereich der Schwenk-Schiebelagerung 46 relativ zu den Speichenarmen 52 verlagert werden.

Mit dem jeweiligen inneren Ende verlaufen die Speichenarme 52 -wie dies in Fig. 2 erkennbar ist - bis zu einem Stützelement 54, welches außenseitig der Nabe 14 des Fahrzeugrads 1 abgestützt beziehungsweise gehalten ist. In der innenliegenden Stellung liegt das Schieberelement 26 an diesem Stützelement 54 an. Außenseitig sind die Speichenarme 52 an einem Trägerrad 56 gehalten. Dabei sind vorliegend die Speichenarme 52, das Stützelement 54 und das Trägerrad 56 einteilig gestaltet. Die sichtbaren Segmente inklusive der Speichen 33 werden demgemäß vom Trägerrad 56 aufgenommen. Dadurch entsteht ein nahezu flächiges Fahrzeugrad 1 mit aerodynamisch günstiger, verbesserter Kontur. Das Trägerrad 56 kann dabei Teil des Fahrzeugrads 1 sein oder aber ein separates Element nach Art einer Radkappe, welche am Fahrzeugrad 1 angebracht wird. Hierdurch ergibt sich eine einfache Nachrüstlösung.

Verringert sich die Geschwindigkeit des Fahrzeugs, so wird bei Unterschreiten einer bestimmten Umfangsgeschwindigkeit des Fahrzeugrades 1 eine selbsttätige Rückstellung des Schieberelements 26 aus der in den Fig. 2 und 4 dargestellten außenliegenden Stellung in Richtung seiner in den Fig. 1 und 3 dargestellten innenliegenden Stellung bewirkt, und zwar mittels wenigstens eines nicht erkennbaren Rückstellelements, insbesondere einer Rückstellfeder. Damit ist eine "Nullstellung", nämlich die innenliegende Stellung gemäß den Fig. 1 und 3 des das verlagerbare Schieberelement 26, die Speichen 33 oder dergleichen sowie die gegebenenfalls vorgesehenen Radsegmente 34 aufweisenden aerodynamischen Systems mit großer Schüsselung (S) bei kleiner Geschwindigkeit gewährleistet.

Zusammenfassend ist festzustellen, dass bei schneller Fahrt und der damit verbundenen schnellen Radumdrehung eine starke Schüsselung (S) des Fahrzeugrades 1 subjektiv nicht so stark wahrgenommen wird. Daher werden bei schneller Fahrt die Radsegmente 34 inklusive der vorzugsweise von außen sichtbaren Speichen 33 über die Fliehkraftsteller beziehungsweise Massengewichte 42 vom Schieberelement 26 her um die Schwenkachse (a), die in der Nähe des Felgenhorns 22 sitzt, bündig zur Radsichel nach außen geklappt, wodurch die Schüsselung (S) reduziert wird. Die Aktivierung der Verlagerungsbewegung des Schieberelements 26 und die hierfür notwendigen Kräfte resultieren dabei aus den Fliehkräften des mindestens einen Massengewichtes 42.

## Patentansprüche

1. Fahrzeugrad (1) für ein Fahrzeug, mit einer Mehrzahl von Speichen (33), Lamellen, Flügeln, Radsegmente (34) oder dergleichen, welche an einer Außenseite (30) des Fahrzeugrades (1) angeordnet sind und die zumindest im zentralen, nabennahen Bereich eine Vertiefung, Mulde, Einbuchtung oder dergleichen bilden, mit einer Kinematik (36), mittels welcher die Kontur der Außenseite (30) des Fahrzeugrades (1) veränderbar ist, und mit einem zwischen einer innenliegenden Stellung und einer außenliegenden Stellung in Richtung der Drehachse (d) des Fahrzeugrades (1) verschiebbaren Schieberelement (26),
**dadurch gekennzeichnet, dass**
zumindest ein Teil der Speichen (33), Lamellen, Flügel, Radsegmente (34) oder dergleichen an dem Schieberelement (26) angelenkt und gemeinsam mit dem Schieberelement (26) unter Veränderung der Form der Vertiefung, Mulde, Einbuchtung oder dergleichen verstellbar sind, und dass die Radsegmente (34) jeweils den Freiraum zwischen zwei benachbart angeordneten Speichen (33) überdecken, wobei die Radsegmente (34) stirnseitig mit den Speichen (33) eine entsprechend große Vertiefung mit einer insgesamt geschlossenen Außenfläche am Fahrzeugrad (1) ausbilden.

2. Fahrzeugrad nach Anspruch 1,
**dadurch gekennzeichnet, dass**
das Schieberelement (26) koaxial zur Drehachse (d) des Fahrzeugrades (1) verschiebbar ist.

3. Fahrzeugrad nach einem der vorhergehenden Ansprüche,
**dadurch gekennzeichnet, dass**
zumindest ein Teil der Speichen (33), Lamellen, Flügel, Radsegmente (34) oder dergleichen an einer am Fahrzeugrad ortsfest angeordneten Achse (a) schwenkbar gelagert sind.

4. Fahrzeugrad nach einem der vorhergehenden Ansprüche,
**dadurch gekennzeichnet, dass**
die Kinematik (36) mindestens einen Fliehkraftsteller (42) umfasst, mittels welchem das Schieberelement (26) zwischen der innenliegenden Stellung und der außenliegenden Stellung verstellbar ist.

5. Fahrzeugrad nach einem der vorhergehenden Ansprüche,
**dadurch gekennzeichnet, dass**
bei einer entsprechend großen Umfangsgeschwindigkeit des Fahrzeugrades (1) eine selbsttätige Verstellung des Schieberelements (26) aus der innenliegenden Stellung in Richtung der außenliegenden Stellung erfolgt.

6. Fahrzeugrad nach einem der vorhergehenden Ansprüche,
**dadurch gekennzeichnet, dass**
die Kinematik (36) mindestens ein Rückstellelement umfasst, mittels welchem das Schieberelement (26) zwischen der außenliegenden Stellung und der innenliegenden Stellung rückverstellbar ist.

7. Fahrzeugrad nach einem der vorhergehenden Ansprüche,
**dadurch gekennzeichnet, dass**
bei Unterschreiten einer bestimmten Umfangsgeschwindigkeit des Fahrzeugrades eine selbsttätige Rückstellung des Schieberelements (26) aus der außenliegenden Stellung in Richtung der innenliegenden Stellung erfolgt.

8. Fahrzeugrad nach einem der vorhergehenden Ansprüche,
**dadurch gekennzeichnet, dass**
die Speichen (33), Lamellen, Flügel, Radsegmente (34) oder dergleichen von dem Schieberelement (26) her um eine Achse (a) in der Nähe eines Felgenhorns (22) klappbar sind.

9. Fahrzeugrad nach einem der vorhergehenden Ansprüche,
**dadurch gekennzeichnet, dass**
die Speichen (33), Lamellen, Flügel, Radsegmente (34) oder dergleichen von einem Trägerrad (56) aufgenommen sind.

## Claims

1. Vehicle wheel (1) for a vehicle, comprising a plurality of spokes (33), lamellae, blades, wheel segments (34) or the like, which are arranged on an outer side (30) of the vehicle wheel (1) and which, at least in the central region close to the hub, form a depression, trough, indentation or the like, comprising kinematics (36), by means of which the contour of the outer side (30) of the vehicle wheel (1) can be changed, and comprising a slide element (26), which is displaceable between an internal position and an external position in the direction of the axis of rotation (d) of the vehicle wheel (1),
**characterized in that**
at least some of the spokes (33), lamellae, blades, wheel segments (34) or the like are articulated on the slide element (26) and can be adjusted together with the slide element (26) by changing the shape of the depression, trough, indentation or the like, **and in that** the wheel segments (34) each cover the free space between two adjacent spokes (33), wherein, at the end face, the wheel segments (34) form, by means of the spokes (33), a correspondingly large depression having an overall closed outer surface on the vehicle wheel (1).

2. Vehicle wheel according to claim 1,
**characterized in that**
the slide element (26) can be displaced coaxially with the axis of rotation (d) of the vehicle wheel (1).

3. Vehicle wheel according to any of the preceding claims,
**characterized in that**
at least some of the spokes (33), lamellae, blades, wheel segments (34) or the like are pivotably mounted on an axis (a) fixedly arranged on the vehicle wheel.

4. Vehicle wheel according to any of the preceding claims,
**characterized in that**
the kinematics (36) comprises at least one centrifugal actuator (42), by means of which the slide element (26) can be adjusted between the internal position and the external position.

5. Vehicle wheel according to any of the preceding claims,
**characterized in that**
at a correspondingly high wheel speed of the vehicle wheel (1), the slide element (26) is automatically adjusted from the internal position in the direction of the external position.

6. Vehicle wheel according to any of the preceding claims,
**characterized in that**
the kinematics (36) comprises at least one resetting element, by means of which the slide element (26) can be reset between the external position and the internal position.

7. Vehicle wheel according to any of the preceding claims,
**characterized in that**
if a particular wheel speed of the vehicle wheel is not met, the slide element (26) is automatically reset from the external position in the direction of the internal position.

8. Vehicle wheel according to any of the preceding claims,
**characterized in that**
the spokes (33), lamellae, blades, wheel segments (34) or the like can be folded from the slide element (26) about an axis (a) in the vicinity of a rim flange (22).

9. Vehicle wheel according to any of the preceding claims,
**characterized in that**
the spokes (33), lamellae, blades, wheel segments (34) or the like are held by a carrier wheel (56).

## Revendications

1. Roue de véhicule (1) pour un véhicule, comportant une pluralité de rayons (33), de lamelles, d'ailettes, de segments de roue (34) ou similaires, qui sont disposés sur un côté externe (30) de la roue de véhicule (1) et qui forment, au moins dans la zone centrale proche du moyeu, un renfoncement, un creux, une encoche ou similaire, comportant un dispositif cinématique (36), au moyen duquel le contour du côté externe (30) de la roue de véhicule (1) peut être modifié, et comportant un élément coulissant (26) pouvant être déplacé entre une position intérieure et une position extérieure dans la direction de l'axe de rotation (d) de la roue de véhicule (1),
**caractérisée en ce que**
au moins une partie des rayons (33), lamelles, ailettes, segments de roue (34) ou similaires sont articulés sur l'élément coulissant (26) et sont réglables conjointement avec l'élément coulissant (26) en modifiant la forme du renfoncement, du creux, de l'encoche ou similaire, **et que** les segments de roue (34) recouvrent respectivement l'espace libre entre deux rayons (33) disposés de manière adjacente, dans laquelle les segments de roue (34) forment côté frontal, avec les rayons (33), un renfoncement de taille correspondante comportant une surface externe globalement fermée sur la roue de véhicule (1).

2. Roue de véhicule selon la revendication 1,
**caractérisée en ce que**
l'élément coulissant (26) peut être déplacé de manière coaxiale par rapport à l'axe de rotation (d) de la roue de véhicule (1).

3. Roue de véhicule selon l'une des revendications précédentes,
**caractérisée en ce que**
au moins une partie des rayons (33), lamelles, ailettes, segments de roue (34) ou similaires sont montés de manière à pouvoir pivoter sur un axe (a) disposé à demeure sur la roue de véhicule.

4. Roue de véhicule selon l'une des revendications précédentes,
**caractérisée en ce que**
le dispositif cinématique (36) comprend au moins un régulateur de force centrifuge (42), au moyen duquel l'élément coulissant (26) peut être réglé entre la position intérieure et la position extérieure.

5. Roue de véhicule selon l'une des revendications précédentes,
**caractérisée en ce que**
lorsqu'une vitesse périphérique de la roue de véhicule (1) est suffisamment élevée, il se produit un déplacement automatique de l'élément coulissant (26) de la position intérieure en direction de la position extérieure.

6. Roue de véhicule selon l'une des revendications précédentes,
**caractérisée en ce que**
le dispositif cinématique (36) comprend au moins un élément de rappel, au moyen duquel l'élément coulissant (26) peut être rappelé entre la position extérieure et la position intérieure.

7. Roue de véhicule selon l'une des revendications précédentes,
**caractérisée en ce que**
lorsqu'une vitesse périphérique déterminée de la roue de véhicule n'est pas atteinte, il se produit un rappel automatique de l'élément coulissant (26) de la position extérieure en direction de la position intérieure.

8. Roue de véhicule selon l'une des revendications précédentes,
**caractérisée en ce que**
les rayons (33), lamelles, ailettes, segments de roue (34) ou similaires peuvent être rabattus à partir de l'élément coulissant (26) autour d'un axe (a) à proximité d'un rebord de jante (22).

9. Roue de véhicule selon l'une des revendications précédentes,
**caractérisée en ce que**
les rayons (33), lamelles, ailettes, segments de roue (34) ou similaires sont reçus par une roue porteuse (56).
